(19) Europäisches Patentamt

European Patent Office

Office européen des brevets

(11) Publication number: 0 416 526 B1

(12) EUROPEAN PATENT SPECIFICATION

(45) Date of publication of patent specification: 13.12.95    (51) Int. Cl.⁶: C08L 61/06

(21) Application number: 90116947.4

(22) Date of filing: 04.09.90

(54) Phenolic resin molding compounds and the articles thereof

(30) Priority: 08.09.89 JP 234114/89

(43) Date of publication of application:
13.03.91 Bulletin 91/11

(45) Publication of the grant of the patent:
13.12.95 Bulletin 95/50

(84) Designated Contracting States:
DE FR GB

(56) References cited:
GB-A- 2 219 298
US-A- 3 438 931
US-A- 3 629 364
US-A- 4 476 277

H.F. MARK et al.: "Encyclopedia of Polymer
Science and Engineering", 1988, vol. 11,
pages 87-89,280, vol. 12, pages 286-288, John
Wiley & Sons, New York, US

(73) Proprietor: Takeda Chemical Industries, Ltd.
1-1, Doshomachi 4-chome
Chuo-ku, OSAKA (JP)

(72) Inventor: Okuno, Toshifumi
17-38, Nishi-ai 1-chome
Ibaraki,
Osaka 567 (JP)
Inventor: Miyaji, Teru
12-22, Umamiminami 3-chome
Koryo-cho,
Kitakatsuragi-gun,
Nara 635 (JP)

(74) Representative: von Kreisler, Alek,
Dipl.-Chem. et al
Patentanwälte
von Kreisler-Selting-Werner
Postfach 10 22 41
D-50462 Köln (DE)

## Description

FIELD OF THE INVENTION

The present invention relates to shaped articles produced by compression molding of a resol type resin sheet molding compound, which articles are having an attractive appearance.

BACKGROUND OF THE INVENTION

The use of resol type phenolic resin in the field of sheet molding compound (hereinafter referred to as SMC) is reported in United States Patent No. 4,075,155. Japanese Kokai Patent Publication No. 62-96556/1987 discloses a phenolic resin molding compound containing the hydroxide or oxide of an alkaline earth metal or a silane compound in addition to a resol type phenolic resin. Japanese Kokoku Patent Publication No. 61-15887/1986 describes the formula of a phenolic resin molding compound. However, while phenolic resin molding compounds have the advantage of high heat resistance and flame retardant property, they have the disadvantage that compression molding causes cure shrinkage leading to poor dimensional accuracy and to poor surface smoothness.

Further, GB-A-2 219 298 discloses a molding compound for producing thermoset chemically stable equipment comprising 25 to 60 parts by weight of a phenol-formaldehyde resol resin and 40 to 75 parts by weight of a mixture of fillers, reinforcing fibers and conventional adjuvants, in which the phenol formaldehyde resol resin contains 0.5 to 20% by weight of one or more polymers based on 1,3-butadiene, 2-chloro-1,3-butadiene or isoprene or their copolymers with 0.5 to 45% by weight of acrylonitrile or with 0.5 to 65% by weight of styrene, the said polymers having a gel proportion of at least 45% by weight and being dispersed in the phenol-formaldehyde resol resin in the form of particles with an average particle size below 3 $\mu$m. The above molding compound may include reinforcing fiber such as glass, carbon and silicon. A phenolic molding composition comprising in intimate admixture a curable phenolic resin and from 0.77 to 17 parts by weight of a non-acidic ethylene/vinyl copolymer per hundred parts phenolic resin, wherein said ethylene/vinyl copolymer contains a polymerized monomer of vinyl comonomer of from 90:10 to 50:50 is known from US-A-3 438 931. Said document further discloses that polyvinyl acetate is useful as an additive in a novolak resin molding compound.

Additionally US-A-4 476 277 discloses that novolak type granular or powdery resins can be used as fillers in rubbery elastic materials.

The object of the present invention is to provide a phenolic resin molding compound capable of giving a shaped article an improved dimensional accuracy and surface smoothness.

SUMMARY OF THE INVENTION

The inventors of the present invention found that addition of polyvinyl acetate to a resol type phenolic resin yields a phenolic resin molding compound with a minimum of cure shrinkage. The present invention has been conceived and developed on the basis of the above findings.

Thus the invention relates to an article obtainable by compression molding of a resol type resin sheet molding compound comprising (1) a resin paste and a (2) reinforcing fiber, wherein the resin paste consists of a resol type phenolic resin, polyvinyl acetate resin, thickener and, optionally, filler, catalyst, internal mold releasing agent and pigment, the proportion of the polyvinyl acetate resin being 5 to 20 weight parts based on 100 parts of the total resin and the amount of reinforcing fiber being of 5 to 70 weight % of the total molding compound.

DETAILED DESCRIPTION OF THE INVENTION

The phenolic resin to be used in the invention is what is generally called resol resin in the industry. Resol type phenolic resin is usually produced by reacting a phenol compound with a stoichiometric excess of an aldehyde compound in the presence of an alkaline catalyst.

The phenol compound used in the production of resol type phenolic resin includes, among others, monophenols (e.g. phenol, trimethylphenol, ethylphenol, m-propylphenol, butylphenol, m-sec-butylphenol, m-isobutylphenol, m-tert-butylphenol, m-bromophenol, m-chlorophenol, m-phenylphenol, m-benzylphenol, octylphenol, m-cetylphenol, m-cumylphenol, m-hydroxyacetophenol, m-hydroxybenzophenone, m-d-limonenephenol, o-cresol, m-cresol, p-cresol, 2,3-xylenol, 2,4-xylenol, 2,5-xylenol, 2,6-xylenol, 3,4-xylenol and 3,5-xylenol) and biphenols (e.g. catechol, resorcinol, hydroquinone and bisphenol A).

The aldehyde compound which can be used in the production of resol type phenolic resin includes, among others, formaldehyde and modified forms thereof, e.g. not less than 37% formalin, paraldehyde, acetaldehyde, propionaldehyde and isobutylaldehyde, and isopentylaldehyde. Formaldehyde is a preferred example. Formaldehyde may be used as an aqueous solution (not less than 37 weight %) or in the form of a low molecular weight polymer such as paraformaldehyde or trioxane. Among other examples of the aldehyde are furfural, 2-ethylhexanal, ethylbutylaldehyde, heptaldehyde, benzaldehyde and crotonaldehyde.

The resol type phenolic resin to be used in the invention is produced by reacting each mole of a phenol compound with 1 to 3 moles of an aldehyde compound in the presence of alkali dissolved in water. The preferred molar ratio of aldehyde compound to phenol compound is about 1.1/1 through 2.5/1.

The alkaline catalyst to be used in the production of resol type phenolic resin includes, among others, alkali metal or alkaline earth metal hydroxides, e.g. sodium hydroxide and calcium hydroxide, ammonium hydroxide, and amines such as triethanolamine.

In accordance with the invention, a thermoplastic resin and a reinforcing fiber are added to resol type phenolic resin. The proportion of resol type phenolic resin is preferably above 70 weight parts based on 100 weight parts of the total resin.

The proportion of polyvinyl acetate is 5 to 20 weight parts to each 100 weight parts of the total resin. Used in lesser amounts, the polyvinyl acetate does not obtain a desired degree of lowprofile effect, while the use of polyvinyl acetate in excess of the above range may compromise the heat resistance or flame retardancy of the product.

The reinforcing fiber to be used in the invention includes, among others, glass fibers (e.g. chopped strand mat, continuous strand mat, glass chop and glass roving), carbon fiber, inorganic fibers such as asbestos, whiskers. Fibers with a monofilament diameter of 9 to 15 $\mu$m and a length in the range of 1.5 mm to 51 mm are preferred. Particularly, the fiber length is preferably 10 to 30 mm in SMC. The amount of such reinforcing fiber is 5 to 70 weight % of the total molding compound.

A filler may be added in the molding compound of the invention. The preferred filler includes, among others, calcium carbonate, clay, talc, aluminum hydroxide, and mixtures thereof. Among other fillers that can be used are microspheres of glass, ceramic, glass powder, silicate, aluminate and rock mica. Instead of such filler, novolac type phenol resin may be added. When the amount of reinforcing fiber is within the range of 5 to 45 weight % of the total molding compound, the amount of the filler is 5 to 300 weight parts and preferably 60 to 200 weight parts. The larger the amount of reinforcing fiber, the greater is the strength of the shaped article but from the standpoint of moldability, it is preferable to reduce the amount of filler when the proportion of reinforcing fiber is increased.

As additives other than those mentioned above, catalysts, thickeners or viscosity builders, internal mold release agents and pigments can be added.

The catalyst includes, among others, the hydroxides and oxides of alkaline earth metals, and two or more kinds of them can be used in combination. The preferred alkaline earth metals are magnesium and calcium. The most desirable catalyst is calcium hydroxide. The catalyst is used in a proportion of 1 to 15 weight % of the total molding compound.

The hydroxides and oxides of alkaline earth metals act not only as catalysts but also as thickeners. Magnesium oxide is a case in point. As other substances which double as the catalyst and thickener, silane compounds can be mentioned. Thus, for example, aminoalkylsilanes can be used. Preferred are $\gamma$-aminopropyltriethoxysilane and N-$\beta$(aminoethyl)-$\gamma$-aminopropyltrimethoxysilane.

The internal mold release agent includes, among others, stearic acid and its metal salts, such as zinc stearate, calcium stearate and magnesium stearate. Organic compounds such as glyceryl monostearate can also be used.

For the production of SMC using such a molding compound of the invention, an SMC production equipment of the type used generally for unsaturated polyester resin can be employed. Thus, a resin paste comprising said resol type phenolic resin and polyvinyl acetate, if necessary supplemented with said filler, catalyst, thickener, internal mold release agent and pigment (e.g. carbon black) is applied, using a doctor blade, for instance, to the fiber reinforcement sandwiched between a pair of films (e.g. polyethylene film) and the assemblage is take up in the form of a roll to provide an SMC. This SMC is matured for an appropriate time period at a temperature between ambient temperature and 40°C, whereby a finished SMC which can be easily handled is obtained.

The phenolic resin molding compound thus obtained is compression molded under heating to give a shaped article.

For this thermal compression molding operation, the conventional molding press can be employed. The compression temperature is 145 to 160°C and the compression pressure is 29.4 to 196 bar (30 to 200 kgf/cm$^2$).

Because the molding compound of the invention contains a thermoplastic resin, it can be compression-molded into shaped articles with attractive appearance and high dimensional accuracy.

The following working examples and comparative examples are further illustrative of the invention.

In the examples, all parts and % are by weight.

Examples 1 to 5 and Comparative Examples 1 to 2

A 5-liter cylindrical vessel was charged with weighed amounts of resol type phenolic resin, thermoplastic resin, zinc stearate and carbon black and the charge was stirred and mixed on a high-speed mixer.

Then, calcium carbonate was added gradually to the mixture and the stirring was continued to give a uniform paste. To hold the viscosity of the paste low, the stirring was performed at a constant temperature of about 40°C. Then, immediately before impregnation of an SMC, calcium hydroxide and magnesium oxide were added to the paste and the mixture was stirred for about 1 minute. The paste was then fed to the doctor blade of an unsaturated polyester SMC impregnation machine (small-sized experimental model) and applied to a sheet of polyethylene film through the doctor blade in a predetermined amount. Then, 2.54 cm (1-inch)-long glass fiber cuttings were deposited on the coated surface of the film and a top sheet of polyethylene film was superimposed thereon to provide a sandwiched structure. Then, by means of the impregnating roll, the glass fibers were impregnated with the paste and the resulting assembly was taken up in the form of a roll and matured at 40°C for 3 days. This procedure provided an SMC.

This SMC was compression-molded at a pressure 98 bar (100 kgf/cm$^2$) and a temperature of 150 to 155°C and the physical properties of the product were determined. The results, as well as the SMC formula, are summarily shown in Tables 1 and 2.

The physical properties were determined in the following manner.

[Mold shrinkage]

A 30 cm square plate (3 mm thickness; keep time: 3 minutes) was molded and the mold dimensions and product dimensions at 25°C were measured. The percent mold shrinkage was calculated by means of the following equation.

$$\text{Mold shrinkage (\%)} = \left(1 - \frac{\sum_{i=1}^{4} Xi}{4 \times Xo}\right) \times 100$$

Xo: Dimension of mold at 25°C (mm)
Xi: Dimension of product at 25°C (mm)
(X and Y dimensions are measured each in duplicate.)

[Flexural strength and Flexural modulus]

Testpieces were cut out from the products and measured in accordance with JIS K-7203.

[Compression strength]

Testpieces were cut out from the products and tested in accordance with JIS K-7056.

Table 1

| <Composition> (parts) | Example | | | Comparative Example |
|---|---|---|---|---|
| | 1 | 2 | 3 | 1 |
| Resol type phenolic resin[1] | 95 | 93 | 85 | 100 |
| Polyvinyl acetate[2] | 5 | 7 | 15 | - |
| Carbon black | 1 | 1 | 1 | 1 |
| Calcium carbonate | 100 | 100 | 100 | 100 |
| Magnesium oxide | 2 | 2 | 2 | 2 |
| Calcium hydroxide | 2 | 2 | 2 | 2 |
| Zinc stearate[3] | 4 | 4 | 4 | 4 |
| 2.54 cm (1") Glass fiber[4] (%) | 28 | 28 | 28 | 28 |
| <Physical properties of shaped article> | | | | |
| Mold shrinkage (%) | 0.08 | 0.05 | 0.02 | 0.13 |
| Flexural strength [MPa (kgf/mm²)] | 226 (23.0) | 206 (21.0) | 186 (19.0) | 245 (25.0) |
| Flexural modulus [MPa (kgf/mm²)] | 11870 (1210) | 11770 (1200) | 10300 (1050) | 12650 (1290) |
| Compression strength [MPa (kgf/mm²)] | 250 (25.5) | 222 (22.6) | 211 (21.5) | 267 (27.2) |

1)     PR53674T, manufactured by Sumitomo Durez Co., Ltd.

2)     ARS-M5, manufactured by Denki Kagaku Kogyo, K.K.

3)     Manufactured by Nippon Oil and Fats Co., Ltd.

4)     Manufactured by Nippon Glass Fiber Co., Ltd.

It is apparent from Table 1 that the addition of thermoplastic resin contributes to reduced mold shrinkage. The lower the mold shrinkage, the more lusterous and attractive was the surface of the shaped article.

Table 2

| | Example 4 | Example 5 | Comparative Example 2 |
|---|---|---|---|
| 〈Composition〉 (parts) | | | |
| Resol type phenolic resin | 95 | 95 | 100 |
| Polyvinyl acetate | 5 | 5 | - |
| Zinc stearate | 6 | 6 | 6 |
| Magnesium oxide | 3 | 3 | 3 |
| Calcium hydroxide | 3 | 3 | 3 |
| 2.54 cm (1") Glass fiber (%) | 45 | 60 | 45 |
| 〈Physical properties of shaped article〉 | | | |
| Mold shrinkage (%) | 0.07 | 0.05 | 0.14 |
| Flexural strength [MPa (kgf/mm$^2$)] | 279(28.5) | 309(31.5) | 275(28.0) |
| Flexural strength [MPa (kgf/mm$^2$)] | 13240(1350) | 13530(1380) | 13240(1350) |
| Compression strength [MPa (kgf/mm$^2$)] | 304(31.0) | 324(33.0) | 309(31.5) |

Though the molding compositions of Examples 4 and 5 did not contain a filler, the addition of thermoplastic resin resulted in reduced mold shrinkage and less warping of the shaped article.

**Claims**

1. An article obtainable by compression molding of a resol type resin sheet molding compound comprising (1) a resin paste and a (2) reinforcing fiber, wherein the resin paste consists of a resol type phenolic resin, polyvinyl acetate resin, thickener and, optionally, filler, catalyst, internal mold releasing agent and pigment, the proportion of the polyvinyl acetate resin being 5 to 20 weight parts based on 100 parts of the total resin and the amount of reinforcing fiber being of 5 to 70 weight % of the total molding compound.

2. The article as claimed in claim 1, wherein the phenolic resin molding compound contains the oxide or hydroxide of an alkaline earth metal.

3. The article as claimed in claim 2, wherein the hydroxide of an alkaline earth metal is calcium hydroxide.

4. The article as claimed in claim 2, wherein the oxide or hydroxide of an alkaline earth metal is used in the proportion of 1 to 15 weight % of the total molding compound.

**Patentansprüche**

1. Gegenstand, der erhältlich ist durch Formpressen einer Plattenformmasse in Form eines Harzes des Resoltyps, umfassend (1) eine Harzpaste und (2) eine Verstärkungsfaser, wobei die Harzpaste aus einem Phenolharz des Resoltyps, einem Polyvinylacetatharz, Verdickungsmittel sowie gegebenenfalls einem Füllstoff, Katalysator, eingearbeiteten Formentrennmittel und Pigment besteht, wobei der Anteil

EP 0 416 526 B1

des Polyvinylacetatharzes 5 bis 20 Gewichtsteile beträgt, bezogen auf 100 Teile des gesamten Harzes, und die Menge der Verstärkungsfaser 5 bis 70 Gew.-% der gesamten Formmasse beträgt.

**2.** Gegenstand gemäß Anspruch 1, wobei die Phenolharz-Formmasse das Oxid oder Hydroxid eines Erdalkalimetalls enthält.

**3.** Gegenstand gemäß Anspruch 2, wobei das Hydroxid eines Erdalkalimetalls Calciumhydroxid ist.

**4.** Gegenstand gemäß Anspruch 2, wobei das Oxid oder Hydroxid eines Erdalkalimetalls in einem Anteil von 1 bis 15 Gew.-% der gesamten Formmasse verwendet wird.

**Revendications**

**1.** Article que l'on peut obtenir en moulant par compression un mélange à mouler en feuilles, à base de résine de type résol, comprenant (1) une pâte de résine et (2) des fibres de renfort, dans lequel la pâte de résine est constituée d'une résine phénolique de type résol, d'une résine de poly(acétate de vinyle), d'un agent épaississant et, éventuellement, d'une charge, d'un catalyseur, d'un agent interne de démoulage et d'un pigment, la proportion de résine de poly(acétate de vinyle) étant de 5 à 20 % parties en poids, pour un total de 100 parties de résine, et la quantité de fibres de renfort représentant de 5 à 70 % du poids total du mélange à mouler.

**2.** Article conforme à la revendication 1, dans lequel le mélange à mouler, à base de résine phénolique, contient un oxyde ou un hydroxyde d'un métal alcalino-terreux.

**3.** Article conforme à la revendication 2, dans lequel l'hydroxyde de métal alcalino-terreux est de l'hydroxyde de calcium.

**4.** Article conforme à la revendication 2, dans lequel l'oxyde ou l'hydroxyde de métal alcalino-terreux est utilisé en une proportion de 1 à 15 % du poids total du mélange à mouler.

7